# EUROPEAN PATENT SPECIFICATION

(11) **EP 1 798 949 B1**
(45) Date of publication and mention of the grant of the patent: **09.10.2013**
(21) Application number: 06123326.8
(22) Date of filing: 01.11.2006
(51) Int. Cl.: H04N 1/32, H04L 12/18

(54) **Communication terminal device**
Übertragungsendgerät
Dispositif terminal de communication

(30) Priority: 13.12.2005 JP 2005358904
(43) Date of publication of application: 20.06.2007
(73) Proprietor: MURATA KIKAI KABUSHIKI KAISHA, Minami-ku, Kyoto-shi, Kyoto 601 (JP)
(72) Inventor: Kawasaki, Shinji, Kyoto 612-8686 (JP)
(74) Representative: WP Thompson

(56) References cited:
- JP-A- 5 075 822
- US-A- 4 956 860
- US-A1- 2006 221 957

## Description

### BACKGROUND OF THE INVENTION

### 1. Field of the Invention

The present invention relates to a communication terminal device, and in particular, relates to a communication terminal device which can communicate after confirming a designated other party.

### 2. Description of the Related Art

A conventional method in a communication terminal device, such as a fax machine, for designating the other party includes a method for designating a fax number of the other party by a speed-dial or from a telephone directory or the like, and a method for directly entering a fax number using a ten-key numeric pad or the like. In case of the former, a registration operation to the telephone directory is troublesome. In case of the latter, a wrong number may be entered by mistake. In order to solve such problems, a conventional device recognizes characters described in an entry column, such as a fax number or a name of the other party described in a transmittal cover page, and refers to a telephone directory database to confirm its presence. The conventional device determines whether or not information described in the cover page matches with information stored in the telephone directory database. When the information described in the cover page matches with the information stored in the telephone directory database, the conventional device automatically establishes a connection with the other party, and transmits image data of a fax document including the cover page to the other end.

Recently, communication terminal devices, such as a fax machine or a Multi Function Peripheral (MFP), have been connected to a network such as a Local Area Network (LAN) and the Internet. A recently known communication terminal device refers to a database on the network to verify a fax number or the like entered by operating the ten-key numeric pad, and acquires a name of a destination that matches with the fax number or the like. Then, the acquired name is displayed on an operation panel of the communication terminal device to confirm the name of the destination.

However, in the case of a broadcast communication in which a plurality of other parties are designated, the plurality of the other ends are desirably verified with the database efficiently within a short period of time. A complicated operation is required when editing the other party which has been fixed once. Thus, there exists room for improvement of such an editing operation.

US 2003/030846 discloses an information processing apparatus, which enables cover sheets and original data to be previewed in the case where facsimile transmission data comprised of original data and cover sheets attached thereto is previewed before transmission thereof to a plurality of destinations in a manner not giving a sense of incompatibility to the conventional display method and operating method which are applied to preview of data in producing multiple prints. In a personal computer as the information processing apparatus, a spooler temporarily stores facsimile transmission data in an intermediate code format, and a despooler generates facsimile transmission data changed from the data stored in the intermediate code format. A printer driver attaches cover sheets to jobs and acquires drawing data of the cover sheets for the respective jobs, and a spool file manager controls preview display according to setting information acquired from the data stored in the intermediate code format and a preview method selected on a CRT.

### SUMMARY OF THE INVENTION

In order to overcome the problems described above, preferred embodiments of the present invention provide a communication terminal device which can efficiently verify a plurality of other parties and which is user-friendly.

According to an aspect of the present invention, there is provided a communication terminal device operative for communication with a plurality of other parties, the communication terminal device comprising: an accepting unit for accepting a designation of a plurality of pieces of destination information each of said plurality of pieces of destination information corresponding to a respective one of said plurality of other parties; a search key deciding unit for creating a plurality of search keys, each search key corresponding to a respective one of said plurality of pieces of destination information; a searching unit for searching a remote prescribed destination information storage device using at least one of said plurality of search keys and for determining whether each one or more of said plurality of pieces of destination information stored in said destination storage device matches a respective search key; characterised by: a determination unit for determining a process to execute in accordance with a determination received from said searching unit and for notifying a fixing unit when said determination received from said searching unit indicates that each one or more of said plurality of pieces of destination information stored in said destination information storage device matches a respective search key; a fixing unit for marking one or more of said plurality of pieces of destination information as verified responsive to a notification from the determination unit that each one or more of said plurality of pieces of destination information stored in said destination information storage device matches a respective search key; and a destination information storage unit for storing said one or more of said plurality of pieces of destination information marked as verified by the fixing unit, wherein the searching unit is arranged to exclude from a subsequent search of the remote prescribed destination information storage device said one or more of said plurality of pieces of destination information stored in said destination information storage unit that are marked by the fixing unit as having been verified.

For example, the communication terminal device is an Internet fax machine, an MFP, a G3 or a G4 fax machine or a telephone set connected to a Public Switched Telephone Network (PSTN), an Internet Protocol (IP) telephone set, an e-mail terminal, a mobile terminal such as a mobile telephone set or a Personal Digital Assistant (PDA), or a computer such as a personal computer.

The destination information is information indicating the other end to which the communication terminal device carries out a communication. For example, the destination information includes a telephone number, a fax number, an Internet fax number, an IP telephone number, an e-mail address, an IP address, and a name. The destination information may be entered and designated by the user using an operation key, or designated using information described in an e-mail or a webpage.

The prescribed destination information storage device may be an electronic address book of the communication terminal device, a remote storage device, or a database provided by a directory service or the like connected via a network. At least one destination information storage device may be previously designated to be searched. The destination information storage device to be searched may be selected or changed as appropriate.

According to the above-described preferred aspect, the other end of the communication may be fixed after verifying with the database, and the verification is not carried out with the database for the already fixed other end. Therefore, even when designating a plurality of other ends, a period of time required for the verification can be reduced. In addition, the communication terminal device can prevent an error when entering the other end. As a result, the user-friendliness of the communication terminal device improves.

The communication terminal device may include an editing unit. Under an editing mode when an editing operation may be performed with respect to the destination information stored in the destination information storage unit, the editing unit accepts the editing operation for any one of the destination information by the user, and executes the editing operation. When the editing unit edits the already fixed destination information, the searching unit searches only the destination information which has been edited by the editing unit.

The communication terminal device may include a fixing flag storage unit, and a control unit. The fixing flag storage unit prepares and stores a fixing flag for each of the destination information accepted by the accepting unit. The control unit resets a fixing flag of the destination information until the destination information accepted by the accepting unit is fixed. The control unit sets the fixing flag of the destination information after the fixing unit fixed the destination information as the other end. The searching unit does not search the destination information in which the fixing flag is set.

According to the above-described communication terminal device, since the destination information of the other end can be edited after the destination information has been fixed, the communication terminal device is user-friendly. Since the verification with the database is not executed for the other end which has already been fixed and not edited, a period of time required for the verification with the database can be reduced, and the verification with the database can be carried out efficiently.

In the above-described communication terminal device, when the editing unit edits the destination information, the control unit controls to reset the fixing flag of the destination information and to carry out the search by the searching unit.

In the above-described communication terminal device, the accepting unit accepts the destination information in form of a character string, and stores as the other end the character string indicating the destination information in the destination information storage unit. Under the editing mode, the editing unit can delete all the character strings indicating one destination information among the other ends stored in the destination information storage unit.

In the above-described communication terminal device, the accepting unit accepts the destination information in form of the character string, and stores the character string of the destination information in the destination information storage unit. Under the editing mode, the editing unit displays a cursor for designating an editing figure in the character string indicating the destination information stored in the destination information storage unit to enable the editing operation to be performed.

The communication terminal device may include a notification unit. When there is no destination information that matches with the search key in the searching unit, the notification unit notifies such a fact. Accordingly, the notification unit can notify the user a fact that there is no designated destination information and a possibility of an error to urge the user to designate the destination information again.

In the above-described communication terminal device, in case of the absence of the destination information that matches with the search key in the searching unit, the editing unit proceeds onto the editing mode of the destination information. Accordingly, in case of the absence of the designated destination information, the communication terminal device can automatically edit the destination information. Thus, the communication terminal device is user-friendly.

The communication terminal device may include a presenting unit which presents destination information that matched with the search key in the searching unit. The presenting unit can display a destination name or the like of the destination information that matched with the search key on a screen to urge the user to confirm the displayed destination name. Accordingly, the user can confirm the destination name or the like obtained by verifying the destination information designated by the user with the database. As a result, the user can confirm whether or not the destination information is correct.

In the above-described communication terminal device, the destination information storage device may include a database of a directory server such as the Lightweight Directory Access Protocol (LDAP).

Further, any combinations of the above-described constituent elements and the conversions of the expression of the present invention between a method, a device, a system, a recording medium, a computer program or the like are also effective as a preferred embodiment of the present invention.

The present invention provides a communication terminal device which can efficiently verify a plurality of other ends and which is user-friendly.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a network configuration of a communication terminal device according to a preferred embodiment of the present invention.

Fig. 2 is a schematic functional block diagram of the communication terminal device illustrated in Fig. 1.

Fig. 3 is a schematic functional block diagram illustrating an editing process function of the communication terminal device illustrated in Fig. 1.

Fig. 4 is a flowchart illustrating an example of an operation performed by the communication terminal device illustrated in Fig. 1.

Fig. 5 illustrates display examples of a display unit and a fixing flag when designating destination numbers for a broadcast communication in the communication terminal device illustrated in Fig. 1.

Fig. 6A and Fig. 6B illustrate display examples of the display unit and a fixing flag when editing an entered number in the communication terminal device illustrated in Fig. 1.

### DETAILED DESCRIPTION OF PREFERRED EMBODIMENTS

Preferred embodiments of the present invention will be described with reference to the attached drawings. Further, like reference numerals are assigned to like constituent elements in all drawings, and a description is omitted as appropriate.

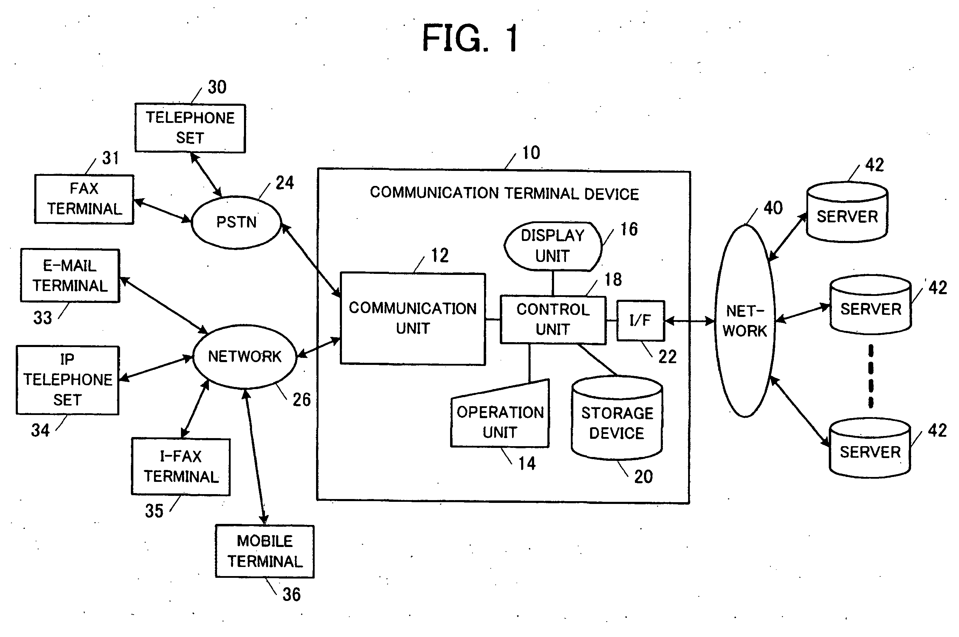

Fig. 1 is a block diagram illustrating a network configuration of a communication terminal device according to a preferred embodiment of the present invention. A communication terminal device 10 according to the present preferred embodiment is connected to a plurality of directory servers (in the drawings, "server") 42 via a network 40. Each directory server 42 includes a database (not illustrated) storing various pieces of information. The communication terminal device 10 transmits a search condition to the directory server 42 to execute the search by the directory server 42. Then, the communication terminal device 10 acquires a search result from the directory server 42. For example, the communication terminal device 10 uses a directory service based on the LDAP to execute a search based on the LDAP by the directory server 42.

In the present preferred embodiment, the database of the directory server 42 stores address information including a plurality of attributes for a plurality of registrants, e.g., a name, a corporate name, a department, a telephone number, a fax number, an IP fax number, and an e-mail address. In the present preferred embodiment, the communication terminal device 10 can access the directory server 42 for acquiring address information of another end or party.

The communication terminal device 10 can communicate with another communication terminal device via a plurality of communication channels. For example, the communication terminal device 10 carries out a voice communication and a data communication with another telephone set 30 and another fax terminal 31 via a PSTN 24. The communication terminal device 10 carries out a voice communication and a data communication with another e-mail terminal 33, another IP telephone set 34, another Internet fax terminal 35, and another mobile terminal 36 via a network 26 such as the Internet or a LAN.

The telephone set 30 may be another mobile telephone terminal (not illustrated) connected via a wireless base station (not illustrated) and a wireless relay station (not illustrated). The fax terminal 31 is another G3 or G4 fax terminal which carries out a communication through the PSTN 24. The e-mail terminal 33, the IP telephone set 34, the Internet fax terminal 35, and the mobile terminal 36 are communication terminal devices, such as another computer, another IP telephone terminal, or another Internet fax terminal, which communicates via a network such as the Internet or the LAN.

In the present preferred embodiment, the communication terminal device 10 is, for example, a network fax machine, an MFP, or an Internet fax. In another preferred embodiment, the communication terminal device 10 may be a G3 or G4 fax machine or a telephone set connected to the PSTN, an IP telephone set, an e-mail terminal, a mobile terminal such as a mobile telephone set or a PDA, or a computer such as a personal computer. Further, in Fig. 1, the configuration of portions unrelated to the subject matter of the present invention is omitted. For example, a scanner unit, an image processing unit, a printer unit, a Modulator-Demodulator (MODEM), a Network Control Unit (NCU), a voice output unit, a sound collector, and a voice processing unit or the like, which are components of a fax machine or a telephone set, are not illustrated.

For example, when the communication terminal device 10 according to the present preferred embodiment carries out a fax transmission to a destination which is not registered in an electronic address book or the like, a user operates a dial key of an operation panel of the communication terminal device 10 to enter a fax number, and a transmission can be carried out. In order to confirm whether or not the manually-entered fax number is correct, the communication terminal device 10 verifies with the database of the directory server 42, and acquires a destination name from the directory server 42. Then, the communication terminal device 10 displays the acquired destination name. The user can carry out a fax transmission after confirming the displayed destination name. As a result, a wrong transmission resulting from an entry error of the fax number can be prevented.

The communication terminal device 10 according to the present preferred embodiment includes a communication unit 12, an operation unit 14, a display unit 16, a control unit 18, a storage device 20, and an interface unit 22.

Each constituent element of the communication terminal device 10 is realized by a combination of hardware and software primarily by a Central Processing Unit (CPU) of any computer, a memory, a program which realizes the constituent elements illustrated in Fig. 1 loaded to the memory, a storage unit such as a hard disk drive which stores the program, and an interface for establishing a connection with a network. It is understood by those skilled in the art that various changes and modifications can be made for methods and devices for realizing each of the constituent elements of the communication terminal device 10. Each of the drawings to be described hereinafter illustrates blocks representing units of function, instead of units of hardware.

The communication unit 12 includes an interface function for carrying out a communication with the telephone set 30 and the fax terminal 31 or the like via the PSTN 24, and a communication with the e-mail terminal 33, the IP telephone set 34, the Internet fax terminal 35, and the mobile terminal 36 or the like via the network 26.

The operation unit 14 receives an instruction of various settings and entries from the user of the communication terminal device 10. The operation unit 14 is an operation button, a switch, a lever, a keyboard, or a touch-screen or the like. In the present preferred embodiment, the operation unit 14 includes a dial key (a ten-key numeric pad), a fax communication instruction key, a broadcast designation key, a transmission start instruction key, and an editing instruction key or the like arranged on an operation panel (not illustrated). The display unit 16 displays various pieces of information, an operation screen, and a performance or a status of the communication terminal device 10. For example, the display unit 16 is a lamp, a Light Emitting Diode (LED), a Cathode Ray Tube (CRT) monitor, or a Liquid Crystal Display (LCD).

The control unit 18 controls various elements of the communication terminal device 10 and also the entire communication terminal device 10. The storage device 20 includes a program area and a working area. The program area stores a control program for controlling the performance of the communication terminal device 10. The working area is used when the control unit 18 executes the program. The storage device 20 also includes a key entry buffer, a destination information storage unit, and a transmission data storage unit described hereinafter. The storage device 20 may also include a storage area for storing information such as an electronic address book.

The interface unit 22 communicates with a plurality of directory servers 42 connected via the network 40. In Fig. 1, the communication unit 12 and the interface unit 22 carries out the communication via the network 40 and the network 26. However, the present invention is not limited to such an example. The communication via the network 40 and the network 26 may be carried out by the same interface unit.

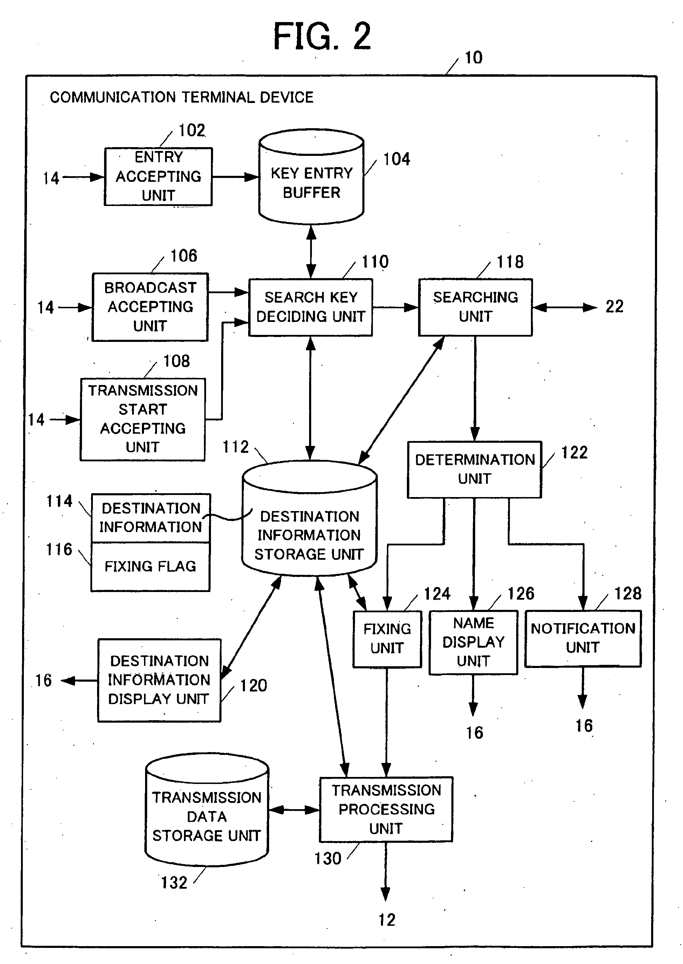

Fig. 2 is a schematic functional block diagram of the communication terminal device 10 according to a preferred embodiment of the present invention. The communication terminal device 10 can carry out a broadcast communication with a plurality of other ends. The communication terminal device 10 includes an accepting unit (an entry accepting unit 102) for accepting destination information designated by the user, a searching unit 118 for searching a prescribed destination information storage device (the directory server 42 of Fig. 1) using the destination information accepted by the accepting unit (the entry accepting unit 102) as a search key, a fixing unit 124 for fixing the destination information that matched with the search key in the searching unit 118 as the other end, and a destination information storage unit 112 which can store a plurality of other ends fixed by the fixing unit 124. The searching unit 118 does not search the other end already fixed by the fixing unit 124.

A program for controlling the operation of the communication terminal device 10 operates a computer including the destination information storage unit 112, which can store a plurality of other ends designated when carrying out the broadcast communication with the plurality of the other ends, as the entry accepting unit 102 for accepting destination information designated by the user, the searching unit 118 for searching a prescribed destination information storage device (the directory server 42 of Fig. 1) using the accepted destination information as a search key, the fixing unit 124 for fixing the destination information that matched with the search key as the other end, and the control unit 18 and a search key deciding unit 110 for controlling the searching unit 118 to not search the other end already fixed by the fixing unit 124.

Specifically, the communication terminal device 10 includes an entry accepting unit 102, a key entry buffer 104, a broadcast accepting unit 106, a transmission start accepting unit 108, a search key deciding unit 110, a destination information storage unit 112, destination information 114, a fixing flag 116, a searching unit 118, a destination information display unit 120, a determination unit 122, a fixing unit 124, a name display unit 126, a notification unit 128, a transmission processing unit 130, and a transmission data storage unit 132. In the following, a description will be made with reference to Fig. 1 and Fig. 2.

The entry accepting unit 102 accepts a character string including an alphanumeral or a character or the like entered by the user using the ten-key numeric pad or the like of the operation unit 14 as destination information. The destination information is information indicating the other end to which the communication terminal device carries out a communication. For example, the destination information includes a telephone number, a fax number, an Internet fax number, an e-mail address, an IP address, and a name. The entry accepting unit 102 may accept a character string of an e-mail address or the like described in an e-mail and a webpage. The key entry buffer 104 temporarily stores the character string accepted by the entry accepting unit 102.

The broadcast accepting unit 106 accepts an operation of a broadcast designation key of the operation unit 14 performed by the user. The transmission start accepting unit 108 accepts an operation of the transmission start instruction key of the operation unit 14 performed by the user. When the broadcast accepting unit 106 or the transmission start accepting unit 108 accepts an operation of a key, the search key deciding unit 110 decides a character string temporarily stored in the key entry buffer 104 as a search key, and delivers the search key to the searching unit 118. The search key deciding unit 110 stores the destination information expressed by the character string, which has been decided as the search key, into the destination information storage unit 112.

The destination information storage unit 112 includes the destination information 114 and the fixing flag 116. The destination information 114 stores destination information expressed by the character string, which has been decided by the search key deciding unit 110. The destination information storage unit 112 can store a plurality of pieces of destination information 114 as a destination of the broadcast communication. The fixing flag 116 is provided for each destination information 114. The fixing flag 116 is set after corresponding destination information 114 has been fixed. A detailed description regarding a fixing of the destination information 114 and the fixing flag 116 will be made later.

The searching unit 118 searches the database of the directory server 42 via the interface unit 22 using the character string decided by the search key deciding unit 110 as the search key. For example, the database of the directory server 42 stores address information such as a name, a fax number, an IP fax number, and an e-mail address, of a plurality of registrants. For example, the searching unit 118 searches the database of the directory server 42 using a fax number entered by the ten-key numeric pad at the entry accepting unit 102 as the search key, and acquires address information such as a fax number and a name that matches with the search key. The search result is delivered to the determination unit 122.

The searching unit 118 may also search an electronic address book stored in the communication terminal device 10. A storage device to be searched may be previously selected and designated from the plurality of the directory servers 42 and the electronic address book of the communication terminal device 10. The storage device to be searched may be selected or changed as appropriate.

The destination information display unit 120 displays on the display unit 16 the designated destination information and the address information such as the name searched by the searching unit 118. Accordingly, by referring to the displayed name, the user can confirm whether or not the designated destination information such as the fax number is an intended other end. That is, since a name of a different other end is displayed when the user has entered a wrong number, the user can realize that the user has entered a wrong number.

The determination unit 122 determines which process to execute in accordance with the search result of the searching unit 118. According to the search result of the searching unit 118, when the corresponding fax number is stored in the database, the determination unit 122 displays the name of the fax number on the name display unit 126 and notifies the fixing unit 124. In case of an absence of a corresponding fax number, the determination unit 122 notifies such a fact to the notification unit 128. In addition, the determination unit 122 notifies the absence of the corresponding data to the user, and notifies such a fact to the notification unit 128.

In response to the notification from the determination unit 122, the fixing unit 124 accesses the destination information storage unit 112, and sets the fixing flag 116 of the destination information 114. The fixing unit 124 instructs the transmission processing unit 130 to start the transmission when the broadcast is not designated and when the transmission start accepting unit 108 has accepted an operation of the transmission start instruction key. When the broadcast accepting unit 106 has accepted an operation of the broadcast designation key, the fixing unit 124 does not instruct the transmission processing unit 130 to start the transmission.

The name display unit 126 displays a name on the display unit 16 in accordance with the instruction from the determination unit 122. In accordance with the instruction from the determination unit 122, the notification unit 128 displays a message on the display unit 16 indicating an absence of the corresponding data, or phonetically outputs a message or an alarm sound or the like from a speaker or the like (not illustrated). As described above, the notification unit 128 can notify the user the absence of the designated destination information and a possibility of an entry error to urge the user to designate the destination information again.

The transmission processing unit 130 starts a transmission process in accordance with the instruction from the fixing unit 124. The transmission data storage unit 132 stores image data of an original document scanned by a scanner or the like (not illustrated). The transmission data storage unit 132 can also store an e-mail text created by an e-mail creating unit (not illustrated) and a designated attached file or the like. The transmission processing unit 130 instructs the communication unit 12 to transmit transmission data stored in the transmission data storage unit 132 to the destination information 114 stored in the destination information storage unit 112. When a broadcast communication is designated, the transmission processing unit 130 instructs the broadcast communication to a plurality of other ends.

In case of a fax transmission, when carrying out by memory transmission, the communication unit 12 starts to store an entered fax number in a memory. When carrying out by a scanner transmission, the communication unit 12 starts dialing the entered fax number. The communication unit 12 establishes a connection with another fax terminal 31 via the PSTN 24, and carries out a fax transmission of the image data of the original document.

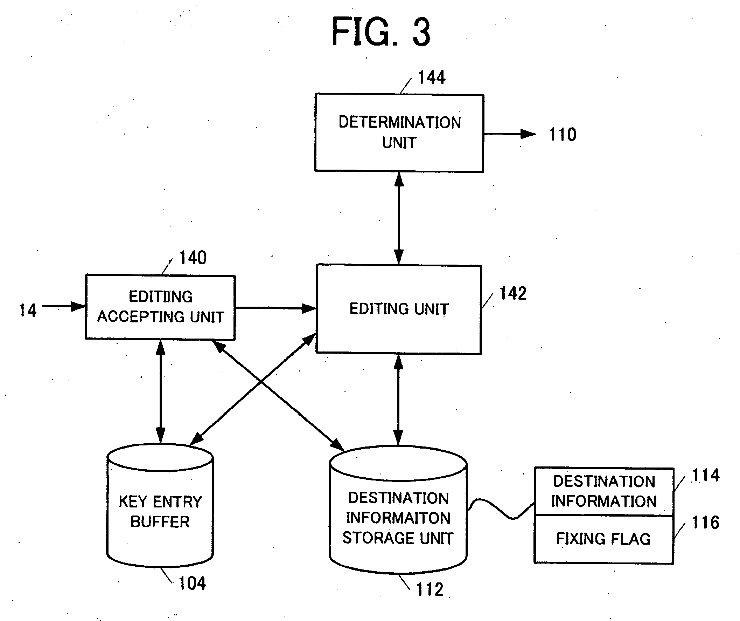

The communication terminal device 10 also includes an editing process unit for editing destination information as illustrated in Fig. 3. The communication terminal device 10 according to the present preferred embodiment includes an editing unit 142. Under an editing mode in which an editing operation may be performed with respect to the destination information 114 of the other end stored in the destination information storage unit 112, the editing unit 142 accepts the editing operation for any one of the destination information 114 by the user and executes the editing operation. When the editing unit 142 edits the already fixed destination information 114, the searching unit (the searching unit 118 of Fig. 2) searches only the destination information 114 edited by the editing unit 142.

Specifically, the communication terminal device 10 also includes an editing accepting unit 140, the editing unit 142, and a determination unit 144. The editing accepting unit 140 accepts an operation of the editing instruction key of the operation unit 14 performed by the user, and a character string including an alphanumeral or a character or the like newly entered by the user. When the editing accepting unit 140 accepts an operation of the editing instruction key, the editing unit 142 proceeds onto the editing mode in which the editing operation can be performed with respect to the destination information 114 stored in the destination information storage unit 112. In this case, the display unit 16 displays the destination information 114 stored in the destination information storage unit 112. In case of an absence of destination information that matches with the search key in the searching unit 118, the editing unit 142 automatically proceeds onto the editing mode of the destination information in accordance with the instruction from the determination unit 122.

When the editing unit 142 proceeds onto the editing mode, the editing unit 142 entirely deletes the character string indicating one destination information 114 among the other ends stored in the destination information storage unit 112, and may urge the user to enter new destination information. In this case, the display unit 16 displays an entry cursor or the like. Alternatively, when the editing unit 142 proceeds onto the editing mode, the editing unit 142 can display a cursor for designating an editing digit in the character string of the destination information of the other end stored in the destination information storage unit 112. The user can edit a character or a number in the digit designated by moving the cursor by operating the operation unit 14. Alternatively, the user can selectively set either one of the above-described two editing operation methods of the editing mode.

The determination unit 144 determines that the editing operation has been completed by the editing unit 142, and notifies such a fact to the search key deciding unit 110. In response to the notification, the search key deciding unit 110 instructs the searching unit 118 to carry out a search by a new search key.

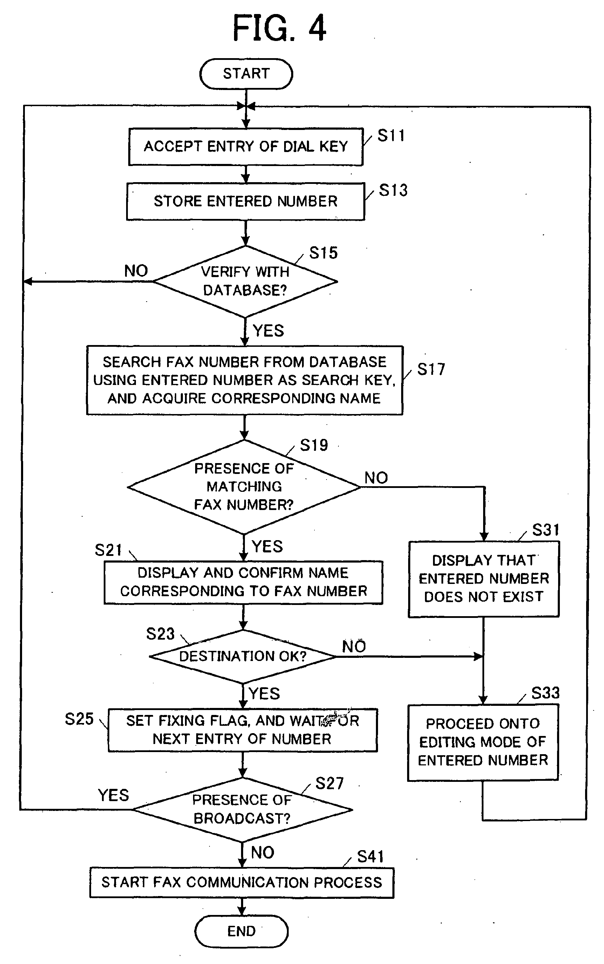

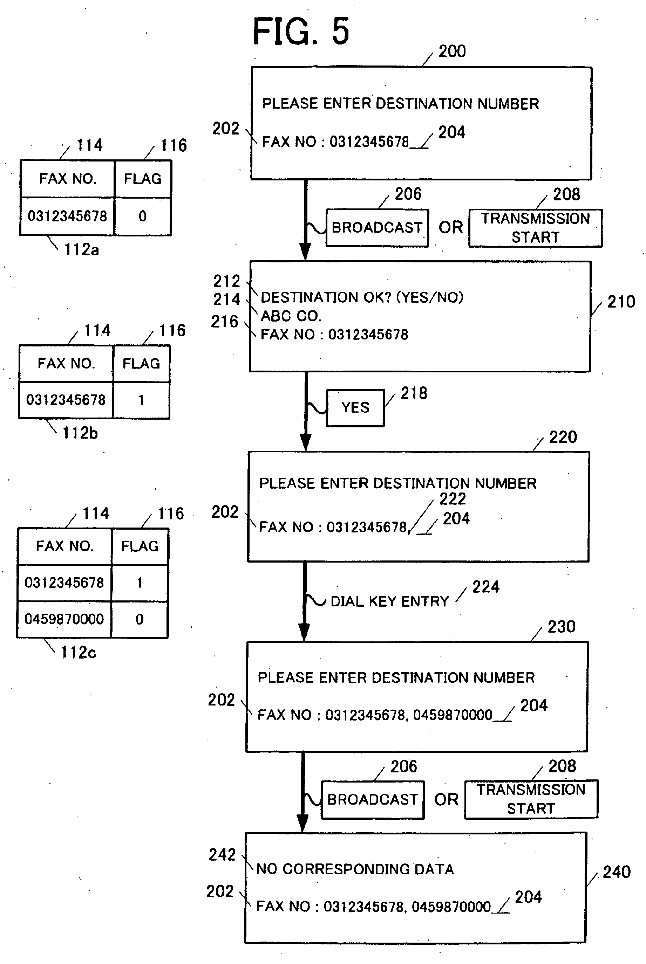

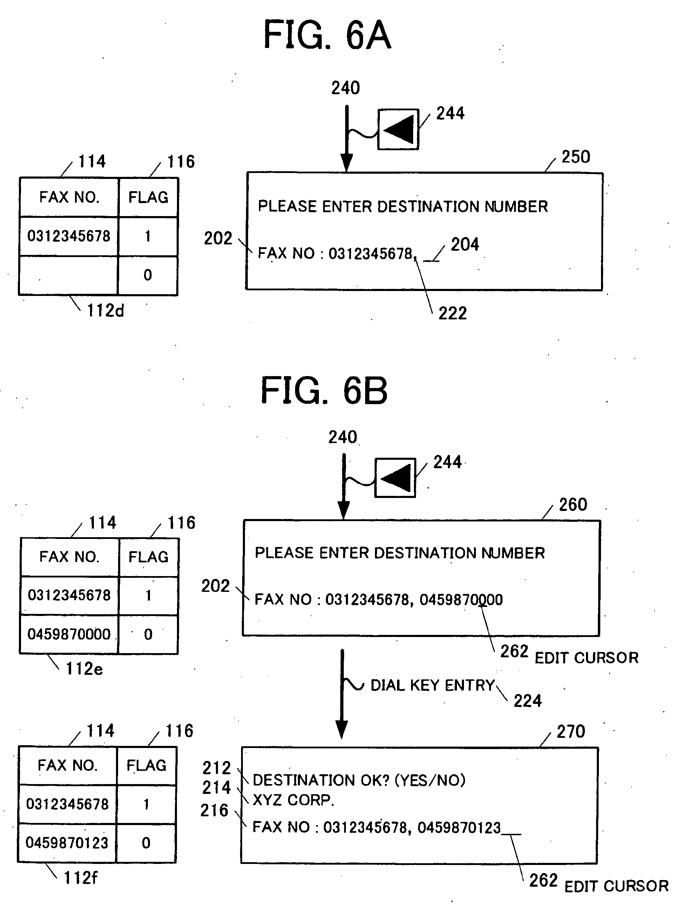

A description will be made of an operation carried out by the communication terminal device 10 according to a preferred embodiment of the present invention. Fig. 4 is a flowchart illustrating an example of an operation carried out by the communication terminal device 10. A description will be made of an example in which a fax transmission is instructed to the communication terminal device 10. However, the present invention is not limited to such an example. The same operation is performed upon an e-mail transmission or other communication processes. Fig. 5 illustrates display examples of the display unit 16 and the fixing flag 116 when designating a broadcast communication to the destination numbers. Fig. 6 illustrates display examples of the display unit 16 and the fixing flag 116 when editing an entered number. In the following, a description will be made with reference to Fig. 1 through Fig. 6.

First, the entry accepting unit 102 accepts an entry of a dial key (step S11). As illustrated in Fig. 5, a fax number "0312345678" is entered. In this case, the display unit 16 displays a screen 200. The entered fax number is stored in the key entry buffer 104 (step S13). In this case, the screen 200 displays an entered destination number 202 and an entry cursor 204.

When the broadcast accepting unit 106 or the transmission start accepting unit 108 accepts an operation of the broadcast key 206 or the transmission start instruction key 208 so as to carry out a verification with the database (step S15: YES), the search key deciding unit 110 decides the fax number stored in the key entry buffer 104 as the search key. In this case, the fax number "0312345678" is stored in the destination information 114 of the destination information storage unit 112 (in Fig. 5, indicated as a destination information storage section 112a). "0" is set in the fixing flag 116.

The searching unit 118 accesses the database of the directory server 42 via the interface unit 22 and carries out the verification using the decided search key (step S17). In case of a presence of a matching fax number, a corresponding name is acquired from the directory server 42. Then, the determination unit 122 determines the presence or absence of a matching fax number in accordance with the search result (step S19). In case of the presence of a fax number (step S19: YES), the name display unit 126 displays the name of the matching fax number on the display unit 16 and notifies to the fixing unit 124 (step S21). The fixing unit 124 displays on a screen 210 illustrated in Fig. 5 on the display unit 16. The screen 210 displays a name 214, an entered fax number 216, and a message 212 confirming whether or not the destination is acceptable. As described above, since the user can confirm the destination corresponding to the entered fax number 216, it is possible to prevent an error transmission resulting from an entry error.

When the destination is acceptable (step S23: YES), i.e., when an accepting unit (not illustrated) accepts an entry of a YES key 218, "1" is set in the fixing flag 116 of the destination information storage unit 112 (in Fig. 5, illustrated as a destination information storage section 112b). Then, the entry accepting unit 102 waits for a next entry of a destination number, and the display unit 16 displays a screen 220 illustrated in Fig. 5 (step S25). The screen 220 displays a comma 222 indicating that the fax number of the destination information 202 has been fixed, and an entry cursor 204.

When entering a broadcast number (step S27: YES), the process returns to step S11, and the entry accepting unit 102 accepts a next destination number. A screen 230 illustrated in Fig. 5 displays a fax number of a next destination. When accepting an operation of the broadcast key 206 or the transmission start instruction key 208 so as to carry out the verification with the database (step S15: YES), a fax number "0459870000" is stored as the second destination number in the destination information 114 of the destination information storage unit 112 (in Fig. 5, illustrated as a destination information storage section 112c). Then, "0" is set in the fixing flag 116. When a broadcast number is not entered, a fax communication process starts (step S41).

The search key deciding unit 110 refers to the fixing flag 116 of the destination information storage unit 112, and decides only the second fax number "0459870000" as the search key, excluding the first fax number having "1" set in the fixing flag 116. Then, the searching unit 118 verifies with the database of the directory server 42 using only the second fax number "0459870000" as the search key (step S17). As described above, the searching unit 118 does not carry out the verification for the destination information which has been already verified. Thus, a period of time required for the verification can be reduced, and the verification can be carried out efficiently.

As a result, in case of an absence of a matching fax number (step S19: NO), the notification unit 128 displays a message 242 on a screen 240 illustrated in Fig. 5 (step S31). Further, the message 242 indicates that an entered number does not exist in the database.

When the entry cursor 204 in the screen 240 is moved by a left arrow key or the like, i.e., as illustrated in Fig. 6A, when the editing accepting unit 140 accepts an operation of a key 244, the process proceeds onto the editing mode (step S33). As illustrated in Fig. 6A, the second destination information 114 is deleted from the destination information storage unit 112 (in Fig. 5, illustrated as a destination information storage section 112d). Then, the process returns to step S11, and an entry of a new number is waited.

Alternatively, as illustrated in Fig. 6B, when the process proceeds onto the editing mode (step S33), the editing unit 142 displays an edit cursor 262 in an editing digit in a screen 260. Then, the determination unit 144 determines whether or not the edit cursor 262 has moved out from a second entered number, so as to carry out the verification with the database (step S15). Such a fact is notified to the search key deciding unit 110, and the newly entered number is decided as the search key (step S17). In this case, the searching unit 118 refers to the fixing flag 116 of the destination information storage unit 112 (in Fig. 6B, illustrated as a destination information storage section 112e), and a search is not carried out with respect to the destination information 114 in which "1" is set. That is, a search is carried out only for a fax number "0459870123" in which "0" is set in the fixing flag 116. The searching unit 118 carries out the verification with the database, and a verification result is displayed on a screen 270 as illustrated in Fig. 6B (step S21). As described above, since the verification with the database is carried out with respect to only the edited destination information, a period of time required for the verification can be reduced, and the verification can be carried out efficiently.

When accepting an instruction from the screen 270 that the destination is acceptable (step S23: YES), "1" is set in the fixing flag 116 corresponding to the fax number "0459870123" of the destination information 114 stored in the destination information storage unit 112 (in Fig. 6B, illustrated as a destination information storage section 112f), and an entry of a next number is waited (step S25).

Further, when the destination is determined not acceptable at step S23 (step S23: NO), the process automatically proceeds into an editing mode of the entered number (step S33).

As described above, according to the communication terminal device 10 of the present preferred embodiment, the other end of the communication can be fixed after verifying with the database, and the verification with the database is not carried out for another end which has been already fixed. Therefore, a period of time required for the verification can be reduced, and it is possible to prevent a wrong other end from being entered. Thus, usability of the communication terminal device 10 improves.

According to the communication terminal device 10 of the present preferred embodiment, since the destination information can be edited after the other end has been fixed, the communication device 10 is convenient. Furthermore, since the verification with the database is not carried out for the other end which has been already fixed and which has not been edited, the period of time required for the verification with the database can be reduced.

According to the communication terminal device 10 of the present preferred embodiment, a notification is carried out regarding a fact that the designated destination information does not exist or a possibility of an error, and the communication terminal device 10 can urge the user to designate the destination information again. In case of the absence of the designated destination information, the editing of the destination information automatically becomes capable of being carried out. Thus, the communication terminal device 10 is user-friendly.

Preferred embodiments of the present invention have been described with reference to the drawings. The above-described preferred embodiments are examples of the present invention. The present invention may be modified or changed in numerous ways.

For example, in the above-described preferred embodiment, the entry accepting unit 102 accepts an entry of a fax number. However, the present invention is not limited to this example. For example, the entry accepting unit 102 may accept an entry of an e-mail address, an IP fax number, a telephone number, and a name or the like. The searching unit 118 may search the name from the e-mail address, the IP fax number, or the telephone number, or search a fax number, an e-mail address, an IP fax number, or a telephone number from the name.

While the present invention has been described with respect to preferred embodiments thereof, it will be apparent to those skilled in the art that the disclosed invention may be modified in numerous ways and may assume many embodiments other than those specifically set out and described above.

## Claims

1. A communication terminal device (10) operative for communication with a plurality of other parties, the communication terminal device comprising:
an accepting unit (102) for accepting a designation of a plurality of pieces of destination information each of said plurality of pieces of destination information corresponding to a respective one of said plurality of other parties;
a search key deciding unit (110) for creating a plurality of search keys, each search key corresponding to a respective one of said plurality of pieces of destination information;
a searching unit (118) for searching a remote prescribed destination information storage device (42) using at least one of said plurality of search keys and for determining whether each one or more of said plurality of pieces of destination information stored in said destination storage device (42) matches a respective search key;
**characterised by**:
a determination unit (122) for determining a process to execute in accordance with a determination received from said searching unit (118) and for notifying a fixing unit (124) when said determination received from said searching unit (118) indicates that each one or more of said plurality of pieces of destination information stored in said destination information storage device (42) matches a respective search key;
a fixing unit (124) for marking one or more of said plurality of pieces of destination information as verified responsive to a notification from the determination unit (122) that each one or more of said plurality of pieces of destination information stored in said destination information storage device matches a respective search key; and
a destination information storage unit (112) for storing said one or more of said plurality of pieces of destination information marked as verified by the fixing unit,
wherein the searching unit is arranged to exclude from a subsequent search of the remote prescribed destination information storage device (42) said one or more of said plurality of pieces of destination information stored in said destination information storage unit (112) that are marked by the fixing unit as having been verified.

2. A communication terminal device (10) according to Claim 1, including:
a fixing flag storage unit (116) for preparing and storing a fixing flag for each piece of the destination information accepted by the accepting unit; and
a control unit (18) for resetting the fixing flag of the destination information until the destination information accepted by the accepting unit is marked as verified, and for setting the fixing flag of the destination information responsive to an instruction from the fixing unit to mark as having been verified the destination information as the other party,
wherein the searching unit (118) is arranged to exclude from the search the destination information in which the fixing flag of the destination information is set.

3. A communication terminal device (10) according to claim 2, including an editing unit (142) operative for performing an editing operation of any one of said plurality of pieces of destination information under an editing mode in which the editing operation may be performed with respect to the destination information of the other party stored in the destination information storage unit,
wherein, responsive to initiation of an editing operation, the control unit (18) resets the fixing flag of the destination information to allow the previously verified destination information to be edited via the editing unit, and
further wherein the control unit is arranged to instruct the searching unit (118) to carry out a search only of the destination information edited by the editing unit.

4. A communication terminal device (10) according to claim 3, wherein, in the absence of destination information that matches with the search key in the searching unit (118), the editing unit (142) is arranged to proceed onto the editing mode of the destination information.

5. A communication terminal device (10) according to claim 3 or 4, wherein the accepting unit (102) is arranged to accept the destination information in a form of a character string, and the character string indicating the destination information is stored in the destination information storage unit (112) as the other party, and
under the editing mode, the editing unit (142) is arranged to entirely delete the character string indicating one destination information of the other parties stored in the destination information storage unit.

6. A communication terminal device (10) according to any one of claims 3 to 5, wherein the accepting unit (102) is arranged to accept the destination information in a form of a character string, and the character string of the destination information is stored in the destination information storage unit (112), and
under the editing mode, the editing unit (142) is arranged to display a cursor that designates an editing digit in the character string indicating the destination information stored in the destination information storage unit to enable editing.

7. A communication terminal device (10) according to any preceding claim, including a notification unit (128) for notifying an absence of destination information that matches with the search key in the searching unit (118) in the event of the absence of destination information that matches with the search key in the searching unit.

8. A communication terminal device (10) according to any preceding claim, including a presenting unit (120 for presenting destination information that matches with the search key in the searching unit (118).

9. A communication terminal device (10) according to any preceding claim, wherein the destination information storage device is a database of a directory server.

## Patentansprüche

1. Kommunikationsendgerät (10) zum Kommunizieren mit einer Mehrzahl von anderen Parteien, wobei das Kommunikationsendgerät Folgendes umfasst:
eine Akzeptiereinheit (102) zum Akzeptieren einer Bezeichnung aus einer Mehrzahl von Zielinformationen, wobei jede der aus der genannten Mehrzahl von Zielinformationen einer jeweiligen einen aus der genannten Mehrzahl von anderen Parteien entspricht;
eine Suchschlüsselentscheidungseinheit (110) zum Erzeugen einer Mehrzahl von Suchschlüsseln, wobei jeder Suchschlüssel einer jeweiligen einen aus der genannten Mehrzahl von Zielinformationen entspricht;
eine Sucheinheit (118) zum Durchsuchen eines ortsfernen vorgeschriebenen Zielinformationsspeichergeräts (42) mittels wenigstens eines aus der genannten Mehrzahl von Suchschlüsseln und zum Ermitteln, ob jede eine oder mehrere der genannten in dem genannten Zielspeichergerät (42) gespeicherten Mehrzahl von Zielinformationen mit einem jeweiligen Suchschlüssel übereinstimmt;
**gekennzeichnet durch**:
eine Ermittlungseinheit (122) zum Ermitteln eines auszuführenden Prozesses gemäß einer von der genannten Sucheinheit (118) empfangenen Ermittlung und zum Benachrichtigen einer Fixiereinheit (124), wenn die von der genannten Sucheinheit (118) empfangene genannte Ermittlung anzeigt, dass jede eine oder mehrere aus der genannten in dem genannten Zielinformationsspeichergerät (42) gespeicherten Mehrzahl von Zielinformationen mit einem jeweiligen Suchschlüssel übereinstimmt;
eine Fixiereinheit (124) zum Markieren von einer oder mehreren aus der genannten Mehrzahl von Zielinformationen als verifiziert als Reaktion auf eine Benachrichtigung von der Ermittlungseinheit (122), dass jede eine oder mehrere aus der genannten in dem genannten Zielinformationsspeichergerät gespeicherten Mehrzahl von Zielinformationen mit einem jeweiligen Suchschlüssel übereinstimmt; und
eine Zielinformationsspeichereinheit (112) zum Speichern der genannten ein oder mehreren aus der genannten Mehrzahl von Zielinformationen, die von der Fixiereinheit als verifiziert markiert wurden,
wobei die Sucheinheit so ausgelegt ist, dass sie die genannten ein oder mehreren aus der genannten in der genannten Zielinformationsspeichereinheit (112) gespeicherten Mehrzahl von Zielinformationen, die von der Fixiereinheit als verifiziert markiert wurden, von einer nachfolgenden Suche in dem ortsfemen vorgeschriebenen Zielinformationsspeichergerät (42) ausschließt.

2. Kommunikationsendgerät (10) nach Anspruch 1, das Folgendes beinhaltet:
eine Fixierflag-Speichereinheit (116) zum Erzeugen und Speichern eines Fixierflag für jede von der Akzeptiereinheit akzeptierte Zielinformation; und
eine Steuereinheit (18) zum Zurücksetzen des Fixierflag der Zielinformation, bis die von der Akzeptiereinheit akzeptierte Zielinformation als verifiziert markiert ist, und zum Setzen des Fixierflag der Zielinformation als Reaktion auf einen Befehl von der Fixiereinheit, die Zielinformation als die andere Partei verifiziert zu markieren,
wobei die Sucheinheit (118) so ausgelegt ist, dass sie die Zielinformation, in der der Fixierflag der Zielinformation gesetzt ist, von der Suche ausschließt.

3. Kommunikationsendgerät (10) nach Anspruch 2, das eine Editiereinheit (142) zum Durchführen eines Editiervorgangs an einer aus der genannten Mehrzahl von Zielinformationen in einem Editiermodus beinhaltet, in dem der Editiervorgang mit Bezug auf die Zielinformation der anderen Partei durchgerührt werden kann, die in der Zielinformationsspeichereinheit gespeichert ist,
wobei die Steuereinheit (18) den Fixierflag der Zielinformation als Reaktion auf die Einleitung eines Editiervorgangs zurücksetzt, so dass die zuvor verifizierte Zielinformation über die Editiereinheit editiert werden kann, und
wobei die Steuereinheit ferner so ausgelegt ist, dass sie die Sucheinheit (118) anweist, eine Suche nur der von der Editiereinheit editierten Zielinformation durchzuführen.

4. Kommunikationsendgerät (10) nach Anspruch 3, wobei die Editiereinheit (142) in Abwesenheit von mit dem Suchschlüssel in der Sucheinheit (118) übereinstimmenden Zielinformationen zum Übergehen in den Zielinformationseditiermodus ausgelegt ist.

5. Kommunikationsendgerät (10) nach Anspruch 3 oder 4, wobei die Akzeptiereinheit (102) so ausgelegt ist, dass sie die Zielinformation in Form einer Zeichenfolge akzeptiert, wobei die Zeichenfolge anzeigt, dass die Zielinformation in der Zielinformationsspeichereinheit (112) als die andere Partei gespeichert ist, und
die Editiereinheit (142) im Editiermodus so ausgelegt ist, dass sie die Zeichenfolge, die eine Zielinformation der anderen in der Zielinformationsspeichereinheit gespeicherten Parteien anzeigt, vollständig löscht.

6. Kommunikationsendgerät (10) nach einem der Ansprüche 3 bis 5, wobei die Akzeptiereinheit (102) so ausgelegt ist, dass sie die Zielinformation in Form einer Zeichenfolge akzeptiert, und die Zeichenfolge der Zielinformation in der Zeilinformationsspeichereinheit (112) gespeichert ist, und
die Editiereinheit (142) im Editiermodus so ausgelegt ist, dass sie einen Cursor anzeigt, der eine Editierstelle in der Zeichenfolge designiert, die die in der Zielinformationsspeichereinheit gespeicherte Zielinformation anzeigt, um Editieren zu ermöglichen.

7. Kommunikationsendgerät (10) nach einem vorherigen Anspruch, mit einer Benachrichtigungseinheit (128) zum Benachrichtigen über ein Fehlen von mit dem Suchschlüssel in der Sucheinheit (118) übereinstimmenden Zielinfbrmationen im Falle der Abwesenheit von mit dem Suchschlüssel in der Sucheinheit übereinstimmenden Zielinformationen.

8. Kommunikationsendgerät (10) nach einem vorherigen Anspruch, einschließlich einer Präsentiereinheit (120) zum Präsentieren von Zielinformationen, die mit dem Suchschlüssel in der Sucheinheit (118) übereinstimmen.

9. Kommunikationsendgerät (10) nach einem vorherigen Anspruch, wobei das Zielinformationsspeichergerät eine Datenbank eines Verzeichnisservers ist.

## Revendications

1. Un dispositif terminal de communication (10) conçu pour une communication avec une pluralité d'autres correspondants, le dispositif terminal de communication comprenant :
une unité d'acceptation (102) destinée à accepter une désignation d'une pluralité d'éléments d'informations de destination, chaque élément de ladite pluralité d'éléments d'informations de destination correspondant à un correspondant respectif de ladite pluralité d'autres correspondants,
une unité de décision de clé de recherche (110) destinée à la création d'une pluralité de clés de recherche, chaque clé de recherche correspondant à un élément respectif de ladite pluralité d'éléments d'informations de destination,
une unité de recherche (118) destinée à la recherche d'un dispositif à mémoire d'informations de destination prescrites distant (42) au moyen d'au moins une clé parmi ladite pluralité de clés de recherche et à la détermination si chacun élément ou plusieurs éléments de ladite pluralité d'éléments d'informations de destination conservées en mémoire dans ledit dispositif à mémoire de destination (42) correspond à une clé de recherche respective,
**caractérisé par** :
une unité de détermination (122) destinée à la détermination d'un processus à exécuter conformément à une détermination reçue de ladite unité de recherche (118) et destinée à la notification d'une unité de fixation (124) lorsque ladite détermination reçue de ladite unité de recherche (118) indique que chacun élément ou plusieurs éléments de ladite pluralité d'éléments d'informations de destination conservées en mémoire dans ledit dispositif à mémoire d'informations de destination (42) correspond à une clé de recherche respective,
une unité de fixation (124) destinée au marquage d'un ou de plusieurs éléments de ladite pluralité d'éléments d'informations de destination comme étant vérifiés en réponse à une notification provenant de l'unité de détermination (122) que chacun élément ou plusieurs éléments de ladite pluralité d'éléments d'informations de destination conservées en mémoire dans ledit dispositif à mémoire d'informations de destination correspond à une clé de recherche respective, et
une unité à mémoire d'informations de destination (112) destinée à la conservation en mémoire desdits un ou plusieurs éléments de ladite pluralité d'éléments d'informations de destination marqués comme étant vérifiés par l'unité de fixation,
où l'unité de recherche est agencée de façon à exclure d'une recherche subséquente du dispositif à mémoire d'informations de destination prescrites distant (42) lesdits un ou plusieurs éléments de ladite pluralité d'éléments d'informations de destination conservées en mémoire dans ladite unité à mémoire d'informations de destination (112) qui sont marqués par l'unité de fixation comme ayant été vérifiés.

2. Un dispositif terminal de communication (10) selon la Revendication 1, comprenant :
une unité à mémoire de bannière de fixation (116) destinée à la préparation et la conservation en mémoire d'une bannière de fixation pour chaque élément d'informations de destination accepté par l'unité d'acceptation, et
une unité de commande (18) destinée à la réinitialisation de la bannière de fixation d'informations de destination jusqu'à ce que des informations de destination acceptées par l'unité d'acceptation soient marquées comme étant vérifiées, et destinée à l'initialisation de la bannière de fixation d'informations de destination en réponse à une instruction provenant de l'unité de fixation destinée à marquer comme ayant été vérifiées des informations de destination en tant que l'autre correspondant,
où l'unité de recherche (118) est agencée de façon à exclure de la recherche des informations de destination dans lesquelles la bannière de fixation d'informations de destination est définie.

3. Un dispositif terminal de communication (10) selon la Revendication 2, comprenant une unité d'édition (142) conçue pour l'exécution d'une opération d'édition de l'un quelconque des éléments de ladite pluralité d'éléments d'informations de destination dans un mode d'édition dans lequel l'opération d'édition peut être exécutée par rapport à des informations de destination de l'autre correspondant conservées en mémoire dans l'unité à mémoire d'informations de destination,
où, en réponse au lancement d'une opération d'édition, l'unité de commande (18) réinitialise la bannière de fixation d'informations de destination de façon à permettre aux informations de destination vérifiées antérieurement d'être éditées par l'intermédiaire de l'unité d'édition, et
où en outre l'unité de commande est agencée de façon à donner l'ordre à l'unité de recherche (118) d'exécuter une recherche uniquement d'informations de destination éditées par l'unité d'édition.

4. Un dispositif terminal de communication (10) selon la Revendication 3, où, en l'absence d'informations de destination qui correspondent à la clé de recherche dans l'unité de recherche (118), l'unité d'édition (142) est agencée de façon à poursuivre vers le mode d'édition d'informations de destination.

5. Un dispositif terminal de communication (10) selon la Revendication 3 ou 4, où l'unité d'acceptation (102) est agencée de façon à accepter des informations de destination sous la forme d'une chaîne de caractères, et la chaîne de caractères indiquant que des informations de destination sont conservées en mémoire dans l'unité à mémoire d'informations de destination (112) en tant que l'autre correspondant, et
dans le mode d'édition, l'unité d'édition (142) est agencée de façon à supprimer entièrement la chaîne de caractères indiquant une information de destination des autres correspondants conservée en mémoire dans l'unité à mémoire d'informations de destination.

6. Un dispositif terminal de communication (10) selon l'une quelconque des Revendications 3 à 5, où l'unité d'acceptation (102) est agencée de façon à accepter des informations de destination sous la forme d'une chaîne de caractères, et la chaîne de caractères d'informations de destination est conservée en mémoire dans l'unité à mémoire d'informations de destination (112), et
dans le mode d'édition, l'unité d'édition (142) est agencée de façon à afficher un curseur qui désigne un chiffre d'édition dans la chaîne de caractères indiquant des informations de destination conservées en mémoire dans l'unité à mémoire d'informations de destination de façon à permettre l'édition.

7. Un dispositif terminal de communication (10) selon l'une quelconque des Revendications précédentes, comprenant une unité de notification (128) destinée à la notification d'une absence d'informations de destination qui correspondent à la clé de recherche dans l'unité de recherche (118) dans le cas de l'absence d'informations de destination qui correspondent à la clé de recherche dans l'unité de recherche.

8. Un dispositif terminal de communication (10) selon l'une quelconque des Revendications précédentes, comprenant une unité de présentation (120) destinée à la présentation d'informations de destination qui correspondent à la clé de recherche dans l'unité de recherche (118).

9. Un dispositif terminal de communication (10) selon l'une quelconque des Revendications précédentes, où le dispositif à mémoire d'informations de destination est une base de données d'un serveur d'annuaire.
